# NEUE EUROPÄISCHE PATENTSCHRIFT

(11) **EP 1 407 912 B2**
(45) Veröffentlichungstag und Bekanntmachung des Hinweises auf die Entscheidung über den Einspruch: **08.07.2015**
(45) Hinweis auf die Patenterteilung: 08.12.2010
(21) Anmeldenummer: 03022348.1
(22) Anmeldetag: 04.10.2003
(51) Int. Cl.: B60J 7/04, B60J 7/16

(54) **Fahrzeugaufbau für Nutzfahrzeuge**
Body structure for commercial vehicle
Carrosserie pour véhicule commercial

(30) Priorität: 11.10.2002 DE 10247479
(43) Veröffentlichungstag der Anmeldung: 14.04.2004
(73) Patentinhaber: Fahrzeugwerk Bernard Krone GmbH, 48480 Spelle (DE)
(72) Erfinder: Krone, Bernard, Dr.-Ing. E.h., 48480 Spelle (DE); Evers, Heinz, 49733 Haren (DE)
(74) Vertreter: Busse & Busse

(56) Entgegenhaltungen:
- EP-A- 0 132 103
- EP-A- 0 498 970
- DE-A1- 3 138 338
- DE-A1- 3 150 707
- DE-C- 19 842 844
- DE-T2- 3 783 994
- DE-U- 29 808 621
- FR-A1- 2 393 692

## Beschreibung

Die Erfindung bezieht sich auf einen Fahrzeugaufbau für Nutzfahrzeuge, insbesondere für Sattelauflieger nach dem Oberbegriff des Anspruchs 1. Derartige Fahrzeuge sind in vielfältigen Ausführungsformen bekannt. Zum Zwecke einer möglichst vollständigen Ausladung bezüglich ihrer Höhe sind solche Sattelauflieger mit Dächern ausgerüstet, welche über eine Hubeinrichtung angehoben werden können, so dass dadurch eine maximale Ladehöhe erreichbar ist, die der lichten Innenhöhe des Fahrzeugaufbaus entspricht, wenn das Dach nicht angehoben ist.

Aus der DE 198 42 844 C1 ist eine mechanische Vorrichtung zum Heben eines auf Eckrungen ruhenden Dachs eines Nutzfahrzeuges bekannt geworden, bei dem die zum Anheben erforderliche Hubarbeit über einen mechanischen Antrieb in der Art eines Kniehebelantriebes aufgebracht wird. Zur Unterstützung des Antriebes ist eine Gasfeder vorgesehen, deren Druckvermögen so bemessen ist, dass sie den Druck des Dachs auf den Antrieb möglichst weitgehend verringert. Diese Unterstützung kann jedoch nur für einen Gewichtszustand des Dachs optimal eingestellt sein. Aus der Praxis weiß man jedoch, dass sich das Gewicht des Dachs eines Nutzfahrzeuges erheblich verändern kann, beispielsweise durch eine Schneelast oder durch die Tatsache, dass die seitlichen Schiebeplanen des Fahrzeugaufbaus ganz in den Bereich einer Vorderwand verschoben worden sind. Durch diese Gewichtsveränderung ergibt es sich, dass entweder das Heben oder das Senken des Dachs mit Hilfe eines derartigen Kniehebelantriebes mit erheblichen körperlichen Anstrengungen verbunden ist. Ein weiterer Mangel der vorstehend beschriebenen Vorrichtung zum Heben eines Nutzfahrzeugdaches ist darin zu sehen, dass das Absacken der Ladefläche des Nutzfahrzeuges beim Beladen auch eine Reduzierung der maximalen Höhe des Fahrzeugaufbaus zur Folge hat. Das bedeutet, dass unter diesen Bedingungen die maximal für den Straßenverkehr zulässige Höhe nicht ausgenutzt wird.

Die DE 298 08 621 U1 offenbart einen hydraulischen Antrieb für ein Hubdach eines Nutzfahrzeugaufbaus, bei dem jede Eckrunge des Fahrzeugaufbaus teleskopartig ausgebildet ist und über einen hydraulischen Zylinder bezüglich ihrer Länge veränderbar ist. Zur Versorgung der hydraulischen Zylinder mit Druckmittel ist ein zentraler hydraulischer Antrieb vorgesehen, welcher aus einer Pumpe mit Vorratstank, sowie einer Steuereinheit und Verbindungsleitungen besteht. Dieser Lösung haftet der Nachteil an, dass neben Dichtigkeitsproblemen an den Verbindungsleitungen zwischen der Pumpe bzw. der Steuereinheit und den jeweiligen hydraulischen Zylindern sich auch eine arbeits- und kostenaufwendige Verlegung der Verbindungsleitungen zu den jeweiligen hydraulischen Zylindern bemerkbar macht.

Aufgabe der Erfindung ist es daher, einen Fahrzeugaufbau für Nutzfahrzeuge der vorstehend angegebenen Art zu schaffen, bei dem die Höhe des Fahrzeugaufbaus in Abhängigkeit von dem jeweiligen Gewicht der Zuladung den zulässigen Grenzwerten optimal angepasst werden kann. Gleichermaßen soll der Fahrzeugaufbau mit einem minimalen Arbeits- und Kraftaufwand so hergerichtet werden können, dass eine bezüglich der Ladehöhe vollständige Ausladung des Laderaumes erreichbar ist.

Zur Lösung dieser Aufgabe zeichnet sich der Fahrzeugaufbau für Nutzfahrzeuge der vorstehenden Art durch die Merkmale des Anspruchs 1 aus. Hinsichtlich der weiteren Ausgestaltung der Erfindung wird auf die Ansprüche 2 bis 11 verwiesen.

Durch die Anwendung der erfindungsgemäßen Merkmale wird ein Fahrzeugsaufbau für Nutzfahrzeuge, insbesondere für Sattelauflieger bereitgestellt, welcher sich dadurch auszeichnet, dass eine Bedienperson ohne körperliche Anstrengung ein Anheben des Dachs des Fahrzeugaufbaus zum Zwecke einer vollständigen Ausladung eines Laderaumes des Nutzfahrzeuges mit der maximalen lichten Innenhöhe ausführen kann. Dazu ist es nach der Erfindung vorgesehen, die einer jeden Eckstütze zugeordnete Hubeinrichtung als ein, die Handkraft einer Bedienperson umsetzen des Stellaggregat zu gestalten. Dieses Stellaggregat ist dabei als eine Kompaktbaugruppe ausgebildet, welches zumindest aus einer Pumpe mit einem Tank zur Aufnahme eines Vorrates an Druckmittel, sowie aus einer Ventileinheit und einem Zylinder zur Ausführung der Stellbewegung besteht. In einer einfachen und somit kostengünstigen Ausführungsform kann dies eine hydraulische Handpumpe sein, die über einen Handhebel von der Bedienperson betätigt werden kann. Des weiteren ist es aber auch durchaus vorstellbar, das die Handkraft einer Bedienperson umsetzende Stellaggregat als ein aus einer Pumpe, einem Tank, einer Ventileinheit und einem Zylinder bestehendes pneumatisches Stellaggregat auszuführen. Die Verwendung derartiger hydraulischer oder pneumatischer Stellaggregate bedingt keine aufwendige und damit unsichere Leitungsverlegung zu den jeweiligen Eckstützen des Fahrzeugaufbaus und ermöglicht es der Bedienperson aber trotzdem, das Dach entsprechend den jeweiligen Erfordernissen an nur einer Eckstütze oder auch an mehreren Eckstützen auf ein Niveau anzuheben, welches ausreicht, den Laderaum des Nutzfahrzeuges in einer Höhe auszuladen, die der lichten Innenhöhe des nicht angehobenen Dachs entspricht.

Gemäß einem weiteren Aspekt der Erfindung ist es vorgesehen, dass die aus einem auf einer Ladefläche ortsfest angebrachten Abschnitt und einem auf- und abbeweglichen Abschnitt gebildeten Eckstützen des Fahrzeugaufbaus zu Beginn eines Hubvorganges des Dachs eine Ausgangsstellung aufweisen, die aus Gründen einer optimalen Anpassung der maximalen Höhe des Fahrzeugaufbaus an die maximal im Straßenverkehr zulässige Höhe verändert werden kann. Das bedeutet, dass das beim Beladen des Nutzfahrzeuges auftretende Absacken der Ladefläche bzw. die damit einhergehende Reduzierung der maximalen Höhe des Fahrzeugaufbaus unter die maximal im Straßenverkehr zulässige Höhe durch eine Veränderung/Verstellung der Ausgangsstellung des auf- und abbeweglichen Abschnittes im Bezug zum ortsfest angebrachten Abschnitt ausgeglichen werden kann. Dadurch wird es in vorteilhafter Weise erreicht, dass bei einem Nutzfahrzeug mit einem, den Laderaum nach außen abgrenzenden Fahrzeugaufbau abhängig vom Gewicht der Zuladung immer ein größtmöglicher Laderaum zur Verfügung gestellt werden kann.

In einer vorteilhaften Ausführungsform der Erfindung ist es vorgesehen, dass der auf - und abbewegliche Abschnitt sich durch den ortsfest angebrachten Abschnitt hindurch erstreckt und somit durch diesen während der Bewegung nach oben oder nach unten geführt ist. Aus Gründen einer einfachen Montage setzt sich der auf- und abbewegliche Abschnitt einer jeden Eckstütze aus zumindest zwei Teilbaugruppen zusammen, wobei eine Aufteilung in eine obere Teilbaugruppe und in eine untere Teilbaugruppe angestrebt wird. Die obere Teilbaugruppe bildet dabei den Teil des auf- und abbeweglichen Abschnittes, der unter dem Einfluss der Hubeinrichtung die Hub- oder Senkbewegung des Dachs bewirkt. Die untere Teilbaugruppe des auf- und abbeweglichen Abschnittes der Eckstützen dient durch die Aufnahme und Halterung der Hubeinrichtung sowie durch seine Erstreckung hin bis zum unteren Ende des ortsfest angebrachten Abschnittes dazu, eine Veränderung/Verstellung der Ausgangsstellung des auf- und abbeweglichen Abschnittes in Bezug zum ortfest angebrachten Abschnitt der Eckstützen zu Beginn eines Hubvorganges zu ermöglichen. Wie bereits ausgeführt, ergibt sich dadurch eine optimale Möglichkeit, abhängig vom jeweiligen Ladegewicht die maximale Höhe des Fahrzeugaufbaus an die maximal zulässige Höhe anzupassen. Zur Veränderung/Verstellung der Ausgangsstellung des auf- und abbeweglichen Abschnittes in Bezug zum ortsfest angebrachten Abschnitt ist im unteren Bereich der unteren Teilbaugruppe ein Verstellfuß vorgesehen, dessen Haltebolzen mit einem von zumindest zwei Verstellbohrungen des ortsfest angebrachten Abschnittes zusammenwirken, so dass dadurch eine werkzeuglose Verstellung der Ausgangsstellung erreichbar ist.

Eine detaillierte Beschreibung des Gegenstandes der Erfindung erfolgt nun anhand eines Ausführungsbeispieles. In der Zeichnung stellt im einzelnen dar:
- Fig. 1: eine perspektivische Ansicht eines Nutzfahrzeuges, insbesondere eines Sattelaufliegers mit einem Fahrzeugaufbau gemäß der Erfindung;
- Fig. 2: eine perspektivische Ansicht einer Eckstütze des Fahrzeugaufbaus aus Fig.1;
- Fig. 3: eine perspektivische Ansicht eines auf- und abbeweglichen Abschnittes der Eckstütze aus Fig.2;
- Fig. 4: eine perspektivische, teilweise abgebrochen dargestellte Ansicht eines unteren Teiles der Eckstütze aus Fig. 2 in einer unteren Ausgangsstellung;
- Fig. 5: eine perspektivische, teilweise abgebrochen dargestellte Ansicht eines oberen Teiles der Eckstütze aus Fig. 2 in einer unteren Ausgangsstellung;
- Fig. 6: eine perspektivische, teilweise abgebrochen dargestellte Ansicht eines unteren Teiles der Eckstütze aus Fig. 2 in einer oberen Ausgangsstellung;
- Fig. 7: eine perspektivische, teilweise abgebrochen dargestellte Ansicht eines oberen Teiles der Eckstütze aus Fig. 2 in einer oberen Ausgangsstellung;
- Fig. 8: eine perspektivische Ansicht eines hydraulischen Stellaggregates;

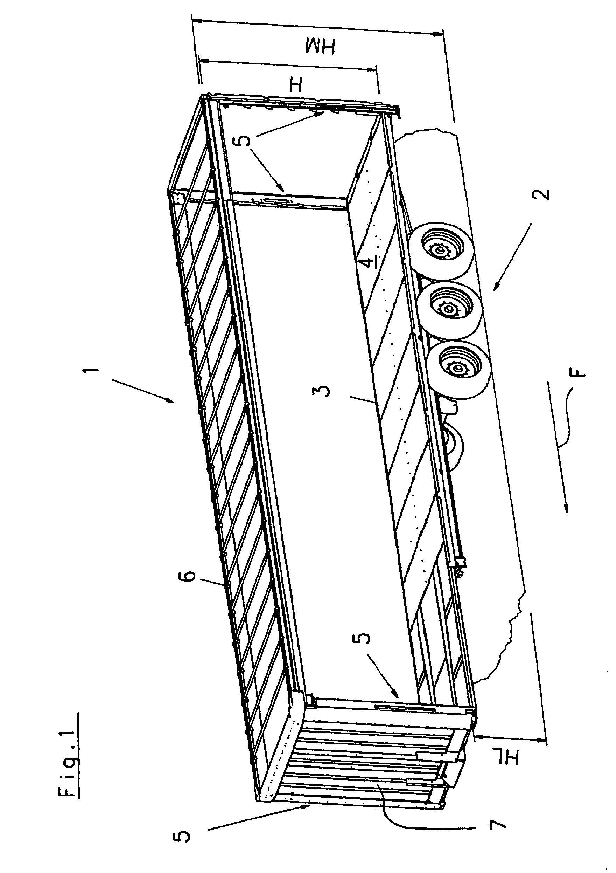

Eines von zahlreichen denkbaren Ausführungsformen eines erfindungsgemäßen Fahrzeugaufbaus für Nutzfahrzeuge ist in Fig. 1 in der Art eines Sattelaufliegers 1 näher veranschaulicht, der sich über ein Fahrwerk 2 gegenüber der Straße abstützt und von einer nicht dargestellten Sattelzugmaschine in Fahrtrichtung F im Straßenverkehr bewegt wird. Oberhalb des Fahrwerks 2 ist ein Ladeboden 3 angeordnet, welcher eine Ladefläche 4 für die zu transportierenden Güter bildet. Jeweils in den Eckbereichen der Ladefläche 4 befinden sich Eckstützen 5, die auf der Ladefläche 4 gehaltert sind und ihrerseits ein Dach 6 abstützen, welches den oberhalb der Ladefläche 4 befindlichen Laderaum nach oben begrenzt. An den Längsseiten des Sattelaufliegers 1 kann der Laderaum beispielsweise durch nicht dargestellte Schiebeplanen abgegrenzt sein, während im vorderen Bereich eine starre Vorderwand 7 und im hinteren Bereich ebenfalls nicht dargestellt Flügeltüren den Abschluss der Ladefläche 4 darstellen. Wie aus der Fig. 1 deutlich hervorgeht, ist es bei einer Beladung des Sattelaufliegers 1 mit Gütern, die entweder eine der lichten Innenhöhe H entsprechenden Höhe aufweisen oder auf einer derartigen Höhe gestapelt sind, erforderlich, das Dach 6 zumindest an der für die Beladung vorgesehenen Längs- oder Rückseite der Ladefläche 4 anzuheben. Bei der Beladung ergibt sich nun eine Reduzierung der Höhe der Ladefläche HL gegenüber dem Erdboden entsprechend dem Gewicht der Zuladung, wobei natürlich auch die maximale Höhe HM des Fahrzeugaufbaus in gleichem Maße abnimmt. Um nun nicht wertvollen Laderaum zu verschenken, ist eine Anpassung der lichten Höhe H des Fahrzeugaufbaus notwendig, worauf im Folgenden noch näher eingegangen wird.

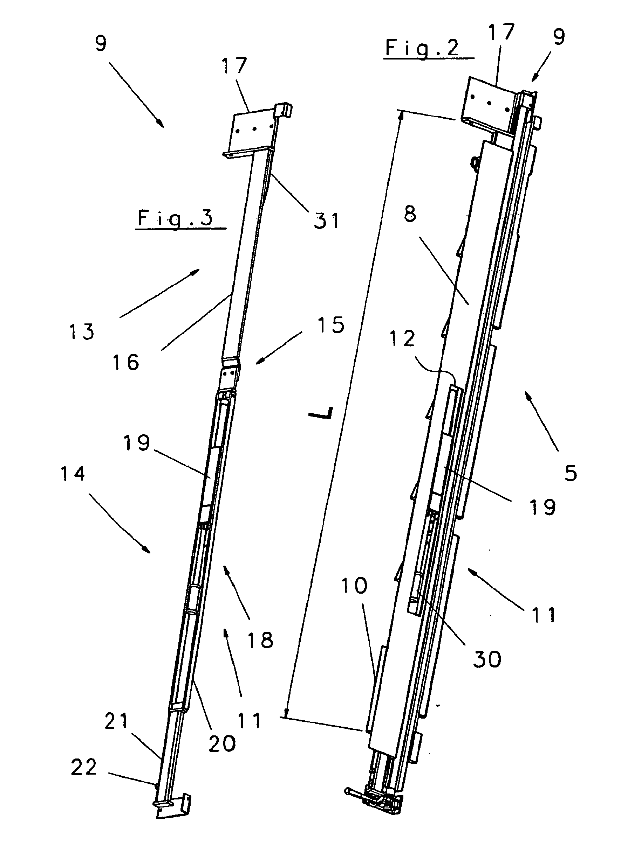

In den Fig. 2 und 3 ist in einer vergrößerten Darstellung eine aus einem ortsfest angebrachten Abschnitt 8 und einem auf- und abbeweglichen Abschnitt 9 gebildete Eckstütze 5 näher veranschaulicht. Der ortsfest angebrachte Abschnitt 8 einer jeden Eckstütze 5 ist dabei im wesentlichen als ein Hohlprofil mit einer von oben nach unten durchgängigen, zumindest in etwa rechteckförmigen Führung für den auf- und abbeweglichen Abschnitt 9 ausgeführt und kann über den Halter 10 an einem nicht dargestellten Halterungselement der Ladefläche 4, beispielsweise über eine Schraubverbindung befestigt werden. Zur Ermöglichung einer bedienerfreundlichen Betätigung einer dem auf- und abbeweglichen Abschnitt zugeordneten Hubeinrichtung 11 ist der ortsfest angebrachte Abschnitt 8 der Eckstützen 5 an der der Ladefläche abgewandten Seite mit einem Betätigungsfenster 12 versehen.

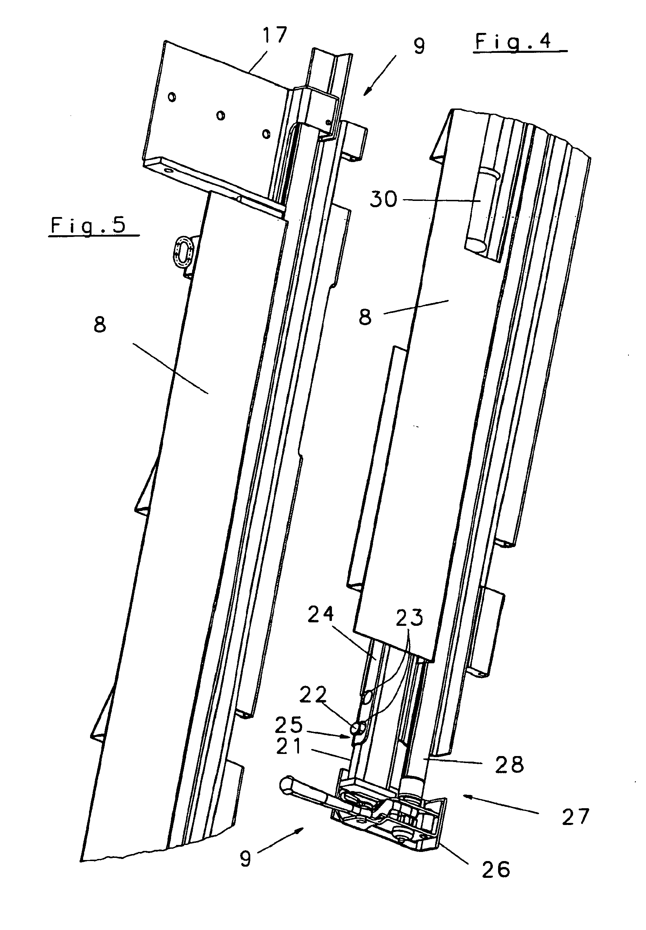

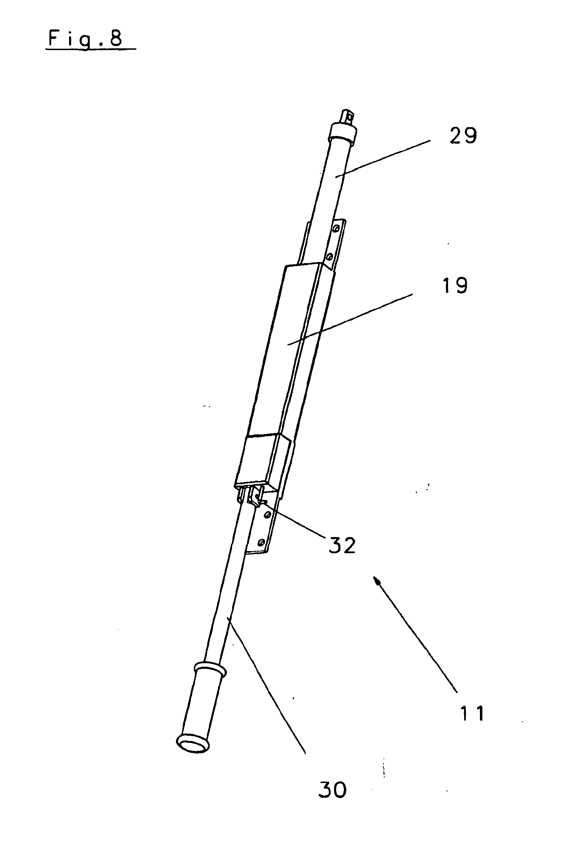

Gemäß der Erfindung setzt sich der auf- und abbewegliche Abschnitt 9 (Fig.3) aus zumindest zwei Teilbaugruppen zusammen, so dass dadurch ein einfaches Zusammenfügen bzw. Montieren des auf- und abbeweglichen Abschnittes 9 innerhalb des ortsfest angebrachten Abschnittes 8 erreichbar ist. Vorzugsweise ist der auf- und abbewegliche Abschnitt 9 einer jeden Eckstütze 5 in eine obere Teilbaugruppe 13 und eine untere Teilbaugruppe 14 aufgeteilt, wobei beide Teilbaugruppen 13,14 an einer Verbindungsstelle 15 über eine Schraubverbindung oder dgl. Verbindung miteinander verbunden sind. Die obere Teilbaugruppe 13 besteht dazu aus einem flachstahlähnlichen Druckstab 16, an dessen oberem Ende sich eine Befestigungsplatte 17 zur Aufnahme eines Dachrahmens anschließt. Die untere Teilbaugruppe dient im wesentlicher als Träger für die Hubeinrichtung 11, welche erfindungsgemäß aus einem die Handkraft einer Bedienperson umsetzenden Stellaggregat 18 gebildet ist. In einer vorteilhaften Ausführungsform ist es vorgesehen, das die Handkraft einer Bedienperson umsetzende Stellaggregat 18 als ein hydraulische Stellaggregat 19 auszuführen (siehe auch Fig.8). Es ist aber auch durchaus denkbar, das Stellaggregat 18 als ein pneumatisches Stellaggregat auszubilden. Wie aus Fig.2 hervorgeht, weist die untere Teilbaugruppe 14 zur Aufnahme des hydraulischen Stellaggregates 19 eine U-förmige Halterung 20 auf, an deren unterem Ende sich ein Verstellfuß 21 anschließt. Dieser Verstellfuß dient dazu, den auf- und abbeweglichen Abschnitt 9 gegenüber dem ortsfest angebrachten Abschnitt 8 in einer Ausgangsstellung zu arretieren, welche zu Beginn eines Hubvorganges vorherrscht und durch das Maß L gekennzeichnet ist. Gemäß der Erfindung kann der auf- und abbewegliche Abschnitt 9 in zumindest zwei Ausgangsstellungen angeordnet werden. Diese beiden Ausgangsstellungen sind in den Figuren 4 bis 7 näher veranschaulicht.

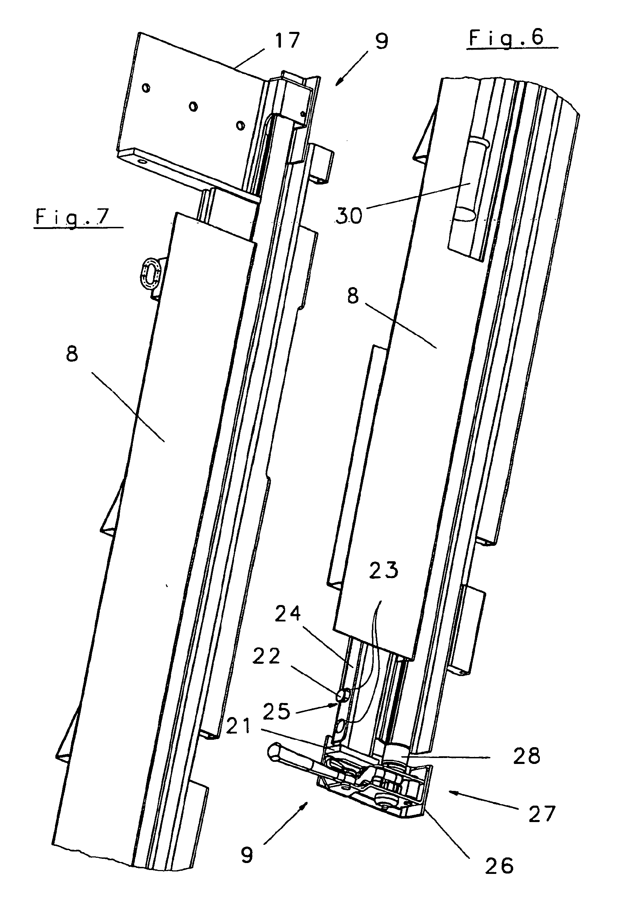

In den Figuren 4 bis 7 ist eine aus dem ortsfest angebrachten Abschnitt 8 und aus dem aufund abbeweglichen Abschnitt 9 zusammengefügte Eckstütze 5 in einer teilweise abgebrochenen Darstellung zu sehen, wobei jeweils nur der obere und der untere Teil der Eckstütze 5 in einer unteren Ausgangsstellung (Fig. 4 und 5) und in einer oberen Ausgangsstellung (Fig. 6 und 7) dargestellt ist. Wie aus diesen Figuren zu entnehmen ist, erfolgt eine Veränderung/Verstellung der Ausgangsstellung des auf- und abbeweglichen Abschnittes 9 in Bezug auf den ortsfest angebrachten Abschnitt 8 durch ein Umstecken eines fest mit dem Stellfuß 21 verbundenen Haltebolzens 22 zwischen den Verstellbohrungen 23 einer am unteren Ende des ortsfest angebrachten Abschnittes 8 angeordneten Haltelasche 24. Als Sicherung gegen selbsttätiges Lösen weist der Haltebolzen 22 eine nach unten gerichtete Sicherungsnut 25 auf.

Gemäß einer weiteren vorteilhaften Ausbildung der Erfindung ist dem auf- und abbeweglichen Abschnitt 8 und dabei insbesondere dem Verstellfuß 21 ein Halter 26 zugeordnet, welcher der Aufnahme einer Spannvorrrichtung 27 einer Seitenplane dient, wobei das zum Aufwickeln der Seitenplane vorgesehene Wickelelement 28 im Bereich der Befestigungsplatte 17 der oberen Teilbaugruppe 13 durch einen nicht sichtbaren Führungsbolzen oder dgl. geführt ist. Durch diese vorteilhafte Gestaltung wird es erreicht, dass mit jeder Änderung/Verstellung der Ausgangsstellung des auf- und abbeweglichen Abschnittes 9 gegenüber dem ortsfest angebrachten Abschnitt 8 auch eine selbsttätige Angleichung der Spann- und Schließverhältnisse der Seitenplane einhergehen.

In Fig. 8 ist in einer perspektivischen Darstellung ein als hydraulisches Stellaggregat 19 ausgebildetes, die Handkraft einer Bedienperson umsetzendes Stellaggregat 18 näher veranschaulicht. Dieses Stellaggregat 19 ist dabei als eine Kompaktbaugruppe ausgebildet, welche zumindest aus einer Pumpe mit einem Tank zur Aufnahme eines Vorrates an Druckmittel, sowie aus einer Ventileinheit und einem Zylinder 29 zur Ausführung der Stellbewegung besteht. In einer einfachen und somit kostengünstigen Ausführungsform kann dies eine hydraulische Handpumpe sein, die über einen Handhebel 30 von der Bedienperson betätigt werden kann, so dass durch eine Schwenkbewegung des Handhebels 30 ein Pumpvorgang durchgeführt wird, wobei das Dach 6 angehoben wird. Zum Absenken des Dachs 6 ist ein Senkventil 32 vorgesehen.

Ein weiterer vorteilhafter Aspekt der Erfindung ergibt sich aus der Befestigung zwischen der oberen Teilbaugruppe 13 des auf- und abbeweglichen Abschnittes 9 und dem Dachrahmen des Dachs 6. Durch die feste Verbindung zwischen der Befestigungsplatte 17 der oberen Teilbaugruppe 13 mit dem Dachrahmen und einer unterhalb der Befestigungsplatte 17 angeordneten, keilförmig nach unten zulaufenden Führung 31(siehe Fig. 3), welche im abgesenkten Zustand des Dachs 6 eine exakte Führung der oberen Teilbaugruppe 13 in dem ortsfest angebrachten Abschnitt 8 bewirkt, ergibt sich eine deutlich verbesserte Stabilität des gesamten Fahrzeugaufbaus. Im angehobenen Zustand des Dachs 6 dagegen wird ausreichend Bewegungsspielraum zur Verfügung gestellt, damit beispielsweise beim einseitigen Anheben des Dachs 6 die sehr kleinen Querbewegungen des Dachs 6 ausgeglichen werden können.

## Patentansprüche

1. Fahrzeugaufbau für Nutzfahrzeuge mit einem Dach (6), welches sich auf Eckstützen (5) abstützt, die an ihrem unteren Ende über einen ortsfest angebrachten Abschnitt (8) auf einer Ladefläche (4) gehaltert und an ihrem oberen Ende über einen auf- und abbeweglichen Abschnitt (9) mit dem Dach (6) verbunden sind, wobei der auf- und abbewegliche Abschnitt (9) zumindest teilweise in dem ortsfest angebrachten Abschnitt (8) geführt ist, mit einer Hubeinrichtung (11), welche einer jeden Eckstütze zur Einleitung einer Hub- oder Senkbewegung des auf- und abbeweglichen Abschnittes (9) gegenüber dem ortsfest angebrachten Abschnitt (8) zugeordnet ist, wobei der auf- und abbewegliche Abschnitt (9) in Bezug zum ortsfest angebrachten Abschnitt (8) der Eckstützen (5) zu Beginn eines Hubvorgangs eine Ausgangsstellung aufweist, welche verstellbar ausgebildet ist und wobei die Hubeinrichtung (11) zur Einleitung einer Hub- oder Senkbewegung des auf- und abbeweglichen Abschnittes (9) als ein die Handkraft einer Bedienungsperson umsetzendes Stellaggregat (18) ausgestaltet ist, **dadurch gekennzeichnet, dass** der auf- und abbewegliche Abschnitt (9) aus einer oberen Teilbaugruppe (13) und einer unteren Teilbaugruppe (14) gebildet ist, wobei die untere Teilbaugruppe (14) mit der oberen Teilbaugruppe (13) zur Verstellung der Ausgangsstellung des auf- und abbeweglichen Abschnittes (9) zu Beginn eines Hubvorganges auf und ab bewegt werden kann und wobei die untere Teilbaugruppe (14) einen Verstellfuß (21) mit einem Haltebolzen (22) aufweist, welcher mit einer von zumindest zwei Verstellbohrungen (23) im unteren Bereich des ortsfest angebrachten Abschnittes (8) zusammenwirkt.

2. Fahrzeugaufbau für Nutzfahrzeuge nach Anspruch 1, **dadurch gekennzeichnet, dass** der auf- und abbewegliche Abschnitt (9) sich auf einer Länge erstreckt, die größer ist als die Länge des ortsfest angebrachten Abschnittes (8).

3. Fahrzeugaufbau für Nutzfahrzeuge nach Anspruch 1 und 2, **dadurch gekennzeichnet, dass** der auf- und abbewegliche Abschnitt (9) sich durch den ortsfest angebrachten Abschnitt (8) hindurch erstreckt.

4. Fahrzeugaufbau für Nutzfahrzeuge nach einem der Ansprüche 1 bis 3, **dadurch gekennzeichnet, dass** der auf- und abbewegliche Abschnitt (9) aus einer oberen Teilbaugruppe (13) und einer unteren Teilbaugruppe (14) gebildet ist.

5. Fahrzeugaufbau für Nutzfahrzeuge nach einem der Ansprüche 1 bis 4, **dadurch gekennzeichnet, dass** die obere Teilbaugruppe (13) durch den Einfluss der Hubeinrichtung (11) der unteren Teilbaugruppe (14) zur Einleitung einer Hub- oder Senkbewegung des Dachs (6) auf- und abbeweglich ausgebildet ist.

6. Fahrzeugaufbau für Nutzfahrzeuge nach Anspruch 5, **dadurch gekennzeichnet, dass** die untere Teilbaugruppe (14) als Hubeinrichtung (11) das die Handkraft einer Bedienperson umsetzendes Stellaggregat (18) aufweist, welches als ein, eine Kompaktbaugruppe bildendes und aus einer Pumpe, einem Tank, einer Ventileinheit und einem Zylinder bestehendes, hydraulisches Stellaggregat (19) ausgeführt ist.

7. Fahrzeugaufbau für Nutzfahrzeuge nach Anspruch 6, **dadurch gekennzeichnet, dass** das hydraulische Stellaggregat (19) eine, über einen Handhebel (30) bedienbare hydraulische Handpumpe ist.

8. Fahrzeugaufbau für Nutzfahrzeuge nach Anspruch 5, **dadurch gekennzeichnet, dass** die untere Teilbaugruppe (14) als Hubeinrichtung (11) ein die Handkraft einer Bedienperson umsetzendes Stellaggregat (18) aufweist, welches als ein, eine Kompaktbaugruppe bildendes und aus einer Pumpe, einem Tank, einer Ventileinheit und einem Zylinder bestehendes pneumatisches Stellaggregat ausgeführt ist.

9. Fahrzeugaufbau für Nutzfahrzeuge nach einem der Ansprüche 5 bis 8, **dadurch gekennzeichnet, dass** die obere Teilbaugruppe (13) eine keilförmig nach unten zulaufende, an der dem Laderaum zugewandten Seite angeordnete Führung (31) aufweist.

10. Fahrzeugaufbau für Nutzfahrzeuge nach einem der Ansprüche 5 bis 9, **dadurch gekennzeichnet, dass** die obere Teilbaugruppe (13) eine Befestigungsplatte (17) zur Aufnahme eines Dachrahmens enthält, wobei die Befestigung mittels einer Schraubverbindung oder dgl. erfolgt.

11. Fahrzeugaufbau für Nutzfahrzeuge nach einem der Ansprüche 5 bis 10, **dadurch gekennzeichnet, dass** der Verstellfuß (21) der unteren Teilbaugruppe (14) einen Halter (26) zur Aufnahme einer Spannvorrichtung (27) einer Seitenplane des Fahrzeugaufbaus aufweist.

## Revendications

1. Carrosserie pour véhicules utilitaires avec un toit (6) qui s'appuie sur des appuis d'angle (5) qui sont fixés sur leur extrémité inférieure par une section (8) montée fixement sur une surface de chargement (4) et sont reliés sur leur extrémité supérieure par une section montante et descendante (9) au toit (6), la section montante et descendante (9) étant guidée au moins en partie dans la section montée fixement (8), avec un dispositif de levage (11) qui est associé à chaque appui d'angle pour l'introduction d'un mouvement de levage ou d'abaissement de la section montante et descendante (9) par rapport à la section (8) montée fixement, la section montante et descendante (9) présentant, par rapport à la section (8) montée fixement des appuis d'angle (5) au début d'un processus de levage, une position de départ qui est réalisée de manière réglable et le dispositif de levage (11) étant configuré pour l'introduction d'un mouvement de levage ou de descente de la section montante et descendante (9) comme un groupe de commande (18) convertissant la force manuelle d'un opérateur, **caractérisée en ce que** la section montante et descendante (9) est formée d'un ensemble partiel supérieur (13) et d'un ensemble partiel inférieur (14), l'ensemble partiel inférieur (14) pouvant monter et descendre avec l'ensemble partiel supérieur (13) pour régler la position de départ de la section montante et descendante (9) au début d'un processus de levage et l'ensemble partiel inférieur (14) présentant un pied de réglage (21) avec un boulon de retenue (22) qui coopère avec l'un d'au moins deux trous de réglage (23) dans la zone inférieure de la section (8) montée fixement.

2. Carrosserie pour véhicules utilitaires selon la revendication 1, **caractérisée en ce que** la section montante et descendante (9) s'étend sur une longueur supérieure à la longueur de la section (8) montée fixement.

3. Carrosserie pour véhicules utilitaires selon les revendications 1 et 2, **caractérisée en ce que** la section montante et descendante (9) s'étend au travers de la section montée fixement (8).

4. Carrosserie pour véhicules utilitaires selon l'une quelconque des revendications 1 à 3, **caractérisée en ce que** la section montante et descendante (9) est constituée d'un ensemble partiel supérieur (13) et d'un ensemble partiel inférieur (14).

5. Carrosserie pour véhicules utilitaires selon l'une quelconque des revendications 1 à 4, **caractérisée en ce que** l'ensemble partiel supérieur (13) est réalisé de manière à monter et descendre de par l'influence du dispositif de levage (11) de l'ensemble partiel inférieur (14) pour l'introduction d'un mouvement de levage ou d'abaissement du toit (6).

6. Carrosserie pour véhicules utilitaires selon la revendication 5, **caractérisée en ce que** l'ensemble partiel inférieur (14) présente, comme dispositif de levage (11), le groupe de commande (18) convertissant la force manuelle d'un opérateur, qui est réalisé comme un groupe de commande (19) hydraulique formant un composant compact et se composant d'une pompe, d'un réservoir, d'une unité de soupapes et d'un cylindre.

7. Carrosserie pour véhicules utilitaires selon la revendication 6, **caractérisée en ce que** le groupe de commande hydraulique (19) est une pompe à main hydraulique maniable par un levier à main (30).

8. Carrosserie pour véhicules utilitaires selon la revendication 5, **caractérisée en ce que** l'ensemble partiel inférieur (14) présente, comme dispositif de levage (11), un groupe de commande (18) convertissant la force manuelle d'un opérateur, qui est réalisé comme un groupe de commande pneumatique formant un composant compact et se composant d'une pompe, d'un réservoir, d'une unité de soupapes et d'un cylindre.

9. Carrosserie pour véhicules utilitaires selon l'une quelconque des revendications 5 à 8, **caractérisée en ce que** l'ensemble partiel supérieur (13) présente un guidage (31) se terminant en forme de coin vers le bas, disposé sur le côté tourné vers l'espace de chargement.

10. Carrosserie pour véhicules utilitaires selon l'une quelconque des revendications 5 à 9, **caractérisée en ce que** l'ensemble partiel supérieur (13) contient une plaque de fixation (17) pour la réception d'un cadre de toit, la fixation étant effectuée à l'aide d'un vissage ou similaire.

11. Carrosserie pour véhicules utilitaires selon l'une quelconque des revendications 5 à 10, **caractérisée en ce que** le pied de réglage (21) de l'ensemble partiel inférieur (14) présente un support (26) pour la réception d'un dispositif de serrage (27) d'une bâche latérale de la carrosserie.

## Claims

1. Body for commercial vehicles, having a roof (6) which is supported on corner posts (5) which, at their bottom end, are each mounted on a load-carrying surface (4) by means of a portion (8) which is mounted in a fixed position and which, at their top end, are each connected to the roof (6) by a portion (9) able to be moved up and down, at least part of the portion (9) able to be moved up and down being guided in the portion (8) which is mounted in a fixed position, and having a raising/lowering means (11) which is associated with each corner post to allow a raising or lowering movement of the portion (9) able to be moved up and down to be initiated relative to the portion (8) which is mounted in a fixed position, the portion (9) of the corner posts (5) which is able to be moved up and down having, at the beginning of a raising/lowering operation, in relation to the portion (8) thereof which is mounted in a fixed position, a starting position which is designed to be adjustable, and the raising/lowering means (11) for initiating a raising or lowering movement of the portion (9) able to be moved up and down taking the form of a positioning assembly (18) which converts the manual force exerted by an operator, **characterised in that** the portion (9) able to be moved up and down is formed by an upper sub-assembly (13) and a lower sub-assembly (14), at the beginning of a raising/lowering operation, the lower sub-assembly (14) being able to be moved up and down with the upper sub-assembly (13) to adjust the starting position of the portion (9) able to be moved up and down, and the lower sub-assembly (14) having an adjusting foot (21) which has a retaining pin (22) which co-operates with one of at least two holes for adjustment (23) in the bottom region of the portion (8) which is mounted in a fixed position.

2. Body for commercial vehicles according to claim 1, **characterised in that** the portion (9) able to be moved up and down extends for a length which is greater than the length of the portion (8) which is mounted in a fixed position.

3. Body for commercial vehicles according to claims 1 and 2, **characterised in that** the portion (9) able to be moved up and down extends through the portion (8) which is mounted in a fixed position.

4. Body for commercial vehicles according to one of claims 1 to 3, **characterised in that** the portion (9) able to be moved up and down is formed by an upper sub-assembly (13) and a lower sub-assembly (14).

5. Body for commercial vehicles according to one of claims 1 to 4, **characterised in that** the upper sub-assembly (13) is designed to be movable up and down by the action of the raising/lowering means (11) belonging to the lower sub-assembly (14), to initiate a raising or lowering movement of the roof (6).

6. Body for commercial vehicles according to claim 5, **characterised in that** the lower sub-assembly (14) has, as a raising/lowering means (11), a positioning assembly (18) which converts the manual force exerted by an operator which takes the form of a hydraulic positioning assembly (19) which forms a compact sub-assembly and which comprises a pump, a tank, a valve unit and a cylinder.

7. Body for commercial vehicles according to claim 6, **characterised in that** the hydraulic positioning assembly (19) is a hydraulic hand pump which can be operated by means of a manual lever (30).

8. Body for commercial vehicles according to claim 5, **characterised in that** the lower sub-assembly (14) has, as a raising/lowering means (11), a positioning assembly (18) which converts the manual force exerted by an operator which takes the form of a pneumatic positioning assembly which forms a compact sub-assembly and which comprises a pump, a tank, a valve unit and a cylinder.

9. Body for commercial vehicles according to one of claims 5 to 8, **characterised in that** the upper sub-assembly (13) has a guide (31) which tapers downwards in a wedge shape and which is arranged on the side adjacent the load-carrying space.

10. Body for commercial vehicles according to one of claims 5 to 9, **characterised in that** the upper sub-assembly (13) includes a fastening plate (17) to receive a roof-frame, the fastening being performed by means of a screwed or bolted connection or the like.

11. Body for commercial vehicles according to one of claims 5 to 10, **characterised in that** the adjusting foot (21) of the lower sub-assembly (14) has a bracket (26) to receive a device (27) for clamping a side-curtain of the vehicle body.
